Europäisches Patentamt

European Patent Office

Office européen des brevets

(19)

(11) Publication number: **0 390 753**
**A1**

(12) **EUROPEAN PATENT APPLICATION**

(21) Application number: **90830116.1**

(22) Date of filing: **20.03.90**

(51) Int. Cl.⁵: **H02N 11/00**

(30) Priority: **29.03.89 IT 4005289**

(43) Date of publication of application:
**03.10.90 Bulletin 90/40**

(84) Designated Contracting States:
**DE FR GB NL**

(71) Applicant: **Lavezzini, Piergiorgio**
**Via Giovanni XXIII, 17/1**
**I-43100 Parma(IT)**

(72) Inventor: **Lavezzini, Piergiorgio**
**Via Giovanni XXIII, 17/1**
**I-43100 Parma(IT)**

(74) Representative: **Lanzoni, Luciano**
**c/o BUGNION S.p.A. Viale Trento Trieste, 25**
**I-41100 Modena(IT)**

(54) **Apparatus for generating energy.**

(57) Falling within the art field of 'clean' energy, the apparatus is designed to harness and exploit a combination of terrestrial magnetic waves and solar radiation, utilizing two cones (2, 3) fashioned in a glass material of maximum possible transparency, and a cylinder (4) embodied in magnetic material; with one cone upturned and positioned inside the cylinder, the remaining cone is set on it in such a way that the bases are matched and the vertices pointed in opposite directions, one down into the cylinder and the other upwards.

Fig.1

The invention relates to an apparatus by means of which to generate energy.

As currently utilized, the light of the sun, which constitutes an inexhaustible source of energy for our planet, is exploited to a bare minimum.

Attempts made thus far to convert photonic energy and calorific and electrical energy, either by the direct exposure of liquids or photoelectrically, have been lacking in real effectiveness, and whilst increased output can be gained using batteries of photovoltaic cells or light-intensifying lenses, physicists remain not altogether satisfied in view of the fact that a direct utilization of sunlight as energy, irrespective of latitude and season, continues to pose problems.

The energy sources currently available to mankind are principally hydrocarbons, coal, uranium, and to a lesser degree, the so-called clean forms such as wind, water or waves, and solar energy as briefly outlined above.

Nonetheless, the most natural method of converting energy adopted by all living beings, excepting man, is by the direct utilization of sunlight, and of a second source about which precious little is known, but which originates a great many phenomena only in part discovered, namely the magnetic energy of the earth.

The object of the present invention is to harness a new source of energy that is clean, natural and inexhaustible.

This new clean energy is referred to throughout the specification as solar magnetic energy, given that it is derived from a combination of solar radiation and terrestrial magnetic waves.

The stated object is fully realized with apparatus according to the invention, as characterized in the appended claims, by which the energy in question is capable of being generated.

The invention will now be described in detail, by way of example, with the aid of the accompanying drawings, in which:

-fig 1 is a schematic illustration of the apparatus in its entirety, applied to a sound transmitter;

-fig 2 illustrates the carrier wave and audio signal received from a source as in fig 1.

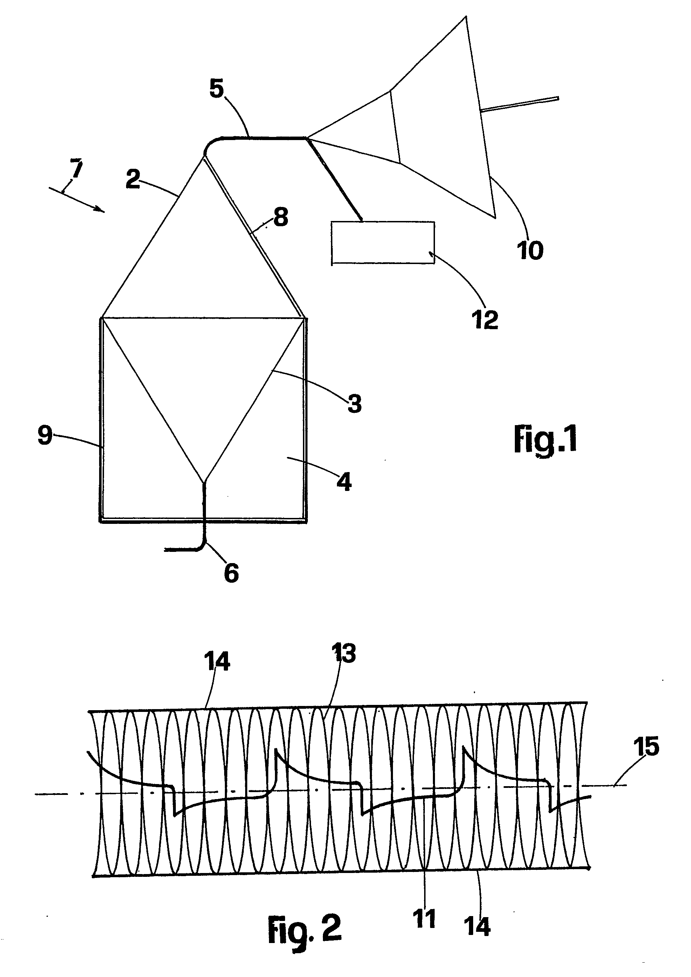

With reference to fig 1, the apparatus consists in a first cone 2, a second cone 3, and a cylinder 4; the cones are fashioned monolithically in a glass material of maximum possible transparency.

The cylinder, which is equal in diameter to the base of the cones, is enclosed at one end and lined internally with a wafer-thin layer 9 of aluminium or stainless steel; it is essential to the object of the invention that the cylinder be fashioned in a material having magnetic properties.

The second cone 3 is positioned internally of the cylinder with its vertex at a given distance from the enclosed bottom; the first cone 2 is disposed with vertex up, its base resting on the upturned base of the second cone 3.

This simple assembly of geometrical solids, which must be placed directly on the ground and not on concrete or timber, provides the means by which to produce the new energy in question.

The first cone 2, which is located externally of the cylinder 4, serves to bring about an internal refraction of the sun's rays, and by virtue of its conical shape, to occasion divergence and downward reflection of the luminous flux. To avoid further refraction outwards, the side of the cone 2 not directly exposed to sunlight (see arrow 7 denoting the direction of the sun's rays) is covered with a wafer-thin layer of aluminium 8, thus directing an increased level of solar radiation downward through continuous internal reflection.

Tapering downwards, the second cone 3 enhances the effect both of reflection and of refraction, thus prolonging the travel of the solar radiation and accumulating greater energy in the apparatus.

Rays of light entering the apparatus are diverted half to the right and half to the left, thus giving rise to two divergent luminous flux components.

Passing to the second cone, the light is refracted for the most part, principally through the effect of recurring reflections, and directed onto the walls of the cylinder, with the result that two vortexes are set up, the one rotating left, the other right.

Magnetic induction internally of the cylinder is greater than outside, by reason of the walls being ferromagnetic.

Within the cylinder, magnetic flux is added to the dual luminous flux from solar radiation, such that two rotating currents of opposite left and right hand are set up consisting in three quarters solar energy and one quarter magnetic.

The two rotating fluxes progress downwards at first due to the angle of reflection from the wall of the first cone 2, before being projected upward again on encountering the thin metallic lining 9 of the cylinder.

Not only does magnetic flux combine with electromagnetic energy, in the proportion mentioned above; in addition, the flux assumes a greater angular velocity, and rises convergently toward the center of the two cones.

The rotating flux, sustained continuously by the incoming solar radiation, converges on the centre following a spiral trajectory; thus, a compressive moment is produced by the resultant centripetally rotating shock wave.

Internally of the two cones, the air is invested with spiralling motion by the rotating flux, its density undergoing a manifold increase until the atoms are ultimately broken up and crushed, and matter is reduced to pure energy according to the mass-energy equation $E = mc^2$. More exactly, the two rotating magnetic fluxes increase vibration and pulsation of the air atoms to the critical point at which matter is converted into energy.

This process comes about at the centre of the common base of the two cones.

The energy thus obtained, magnetic carrier energy, is projected toward the vertices of the first and second cones, according to whether the rotation of the flux is left or right hand. The term "carrier" is adopted for the reason that, in the case of the experiment conducted, the energy generated has been used specifically for the purpose of transmitting an audio signal; the term generally describing the phenomenon in question, would be solar magnetic energy.

5 and 6 denote two wires attached to the vertices of the respective cones 2 and 3, from which energy generated by the apparatus is tapped. The wire 6 from the bottom cone is connected to earth, whilst energy for a given application is supplied by way of the wire 5 connected to the top cone.

In the example illustrated, a mixer denoted 10 is used to exploit energy tapped from the apparatus as a carrier wave.

The method of transmission is quite different from conventional models, as regards both modulation of the signal and the nature of the carrier wave.

In the interests of simplicity, a signal similar to a telegraphic tick is adopted for transmission purposes (illustrated in fig 2) generated by a low frequency two stage Wien bridge oscillator 12; the waveshape resembles that produced by an ordinary RC circuit.

The signal is modulated, or rather superimposed on the carrier wave, by a mixer consisting in a funnel shaped wave guide 10 provided internally with a nickel-faced antenna extending the entire length of the funnel and supported at the top end by six web members (not illustrated) welded to the side wall and converging on the centre.

The mixer input is wired to the top cone 2 of the apparatus and the Wien oscillator 12, and thus in receipt of the audio signal and the solar magnetic carrier together.

An oscilloscope reading taken at 2 kilometres from the apparatus and the transmitter shows a wave, or rather a pattern of waves and lines, of singularly unusual character.

The full height of the trace (fig 2) is occupied by a sine wave 13 of 5.7 MHz frequency and 16 V max, the maximum amplitude on either side banded by two clearly defined borders 14 running parallel to the carrier axis 15 in the manner of tramlines.

11 denotes the transmitted signal, encompassed by and superimposed on the carrier wave, which appears in reception with the identical shape and voltage to those monitored at the output of the oscillator, hence at the transmitter.

Similarly, frequency and amplitude of the received audio signal remain exactly as transmitted.

Varying the frequency of the transmitted signal, a new corresponding waveshape is generated by the oscilloscope.

Moreover, the carrier wave is not eliminated by demodulation; the shape continues to appear on the oscilloscope, and there is no effect whatever on reception of the signal.

To recapitulate, the carrier wave consists in two tramlines between which the oscillations are of a clearly definable frequency. The signal transmitted has no adverse effect whatever on amplitude and frequency of the carrier wave, being encompassed entirely by the relative shape. Thus, one has two superimposed waveshapes, signal and carrier, both of which cleanly banded by two firm lines.

A number of advantages are attached to the results thus obtained.

The projection of an audio signal over a distance without modulating the carrier wave reflects a method of transmission that is not only different, but also an improvement on present methods.

In telecommunications currently, the amplitude- or frequency-modulated carrier may suffer interference from other transmission sources or generators of energy waves in general, or undergo distortion from electronic equipment such as affects the clarity of reception.

By contrast, the carrier wave experimented remains unaffected by interference or other disturbances, given that, whereas these are electromagnetic, the carrier is not.

The fact that waveshape and voltage of the signal in reception remain the same as at source signifies protection from any interference whatever during transmission, and in particular, the appearance in the trace of the two amplitude tramlines provides confirmation of a reasonable conclusion, namely: that the carrier would seem to possess a natural barrier, encompassing the signal and microwaves and protecting them from external interference.

Viewed three-dimensionally, in fact, the carrier energy would appear as a vortex, encompassing the transmitted audio signal at centre.

Notwithstanding the carrier wave must pass through initial demodulation and successive filter stages of the receiving equipment, it will not disappear, as the type of energy in question is unaffected by electronic components. Moreover, as the distance increases, so also does the power of the vortex, whilst the voltage of the signal remains unvaried.

## Claims

1) Apparatus for generating energy, characterized
-in that it comprises two cones (2, 3) disposed with bases coinciding and vertices oppositely oriented, one of which inserted in a cylinder (4) exhibiting base dimensions identical to those of the cones and enclosed at the end occupied by the vertex of the inserted cone;
-in that the two cones (2, 3) are embodied in a monolithic transparent material, whereas the cylinder (4) is embodied in magnetic material and provided with a reflecting internal surface; and
-in that the vertices of the cones provide the points from which to tap the energy generated by the apparatus.

2) Apparatus as in claim 1, wherein the cone (2) located externally of the cylinder (4) is covered with a reflecting material (8) over the area not directly exposed to solar radiation.

3) Apparatus as in claim 1, wherein the cylinder (4) is lined internally with a wafer-thin layer (9) of aluminium or stainless steel.

**Fig.1**

**Fig. 2**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-3781647 (P.E.GLASER) <br> * the whole document * | 1 | H02N11/00 |
| A | ELEKTOR ELECTRONICS. <br> vol. 13, no. 147, July 1987, CANTERBURY GB <br> pages 22 - 26; <br> "Solar power generation" <br> * the whole document * | 1 | |

TECHNICAL FIELDS
SEARCHED (Int. Cl.5 )

H02N

The present search report has been drawn up for all claims

| Place of search | Date of completion of the search | Examiner |
|---|---|---|
| THE HAGUE | 09 JULY 1990 | ZANICHELLI F. |